# EUROPÄISCHE PATENTSCHRIFT

(11) **EP 2 127 950 B1**
(45) Veröffentlichungstag und Bekanntmachung des Hinweises auf die Patenterteilung: **28.12.2011**
(21) Anmeldenummer: 09006519.4
(22) Anmeldetag: 14.05.2009
(51) Int. Cl.: B60R 1/00

(54) **Verfahren und Vorrichtung zur Vergrößerung des Sehfeldes eines in einem Kraftfahrzeug befindlichen Fahrers**
Method and device for increasing the field of vision of a driver in a motor vehicle
Procédé et dispositif d'agrandissement du champ visuel d'un conducteur se trouvant dans un véhicule automobile

(30) Priorität: 30.05.2008 DE 102008026059
(43) Veröffentlichungstag der Anmeldung: 02.12.2009
(73) Patentinhaber: Rheinmetall Landsysteme GmbH, 24107 Kiel (DE)
(72) Erfinder: Bernhard, Björn, 34626 Neukirchen-Asterode (DE); Morel, Sylvian, Brossard Quebec J4Y1L6 (CA)
(74) Vertreter: Dietrich, Barbara

(56) Entgegenhaltungen:
- DE-A1- 10 340 496
- DE-A1-102007 032 527
- JP-A- 2005 184 225
- JP-A- 2006 290 304
- JP-A- 2008 087 651
- US-A1- 2005 168 695

## Beschreibung

Die Erfindung betrifft eine Vorrichtung zur Vergrößerung des Sehfeldes eines in einem insbesondere gepanzerten Kraftfahrzeug befindlichen Fahrers, wobei das Kraftfahrzeug vorderseitig das Sehfeld begrenzende Hindernisse, wie Holme, A-Säulen, Fensterrahmen etc., aufweist.

Um insbesondere in gepanzerten Kraftfahrzeugen im Einsatz sicher fahren zu können, ist es wünschenswert, dem Fahrer eine gute Rundumsicht, ebenso wie die Möglichkeit der Nahfeldbeobachtung, zu ermöglichen. Dem steht indessen entgegen, dass die hohen Schutzanforderungen an derartige Kraftfahrzeuge möglichst kleine Scheiben erfordern, die aufgrund der Materialstärke überdies eine eingeschränkte Transparenz aufweisen, so dass das Sehfeld des Fahrers insbesondere durch die vorderseitig angeordneten, relativ breiten A-Säulen des Kraftfahrzeuges stark beschränkt wird.

In einer parallelen Anmeldung der Anmelderin wird vorgeschlagen, jeder A-Säule ein eigenes Kamera-Monitor-System zuzuordnen, wobei die Kamera des jeweiligen Systems außenseitig an der diesem System zugeordneten A-Säule und der dieser Kamera zugeordnete Monitor innenseitig an der A-Säule des entsprechenden Kraftfahrzeuges befestigt sind, derart, dass die ohne die Kamera-Monitor-Systeme durch die A-Säulen des Kraftfahrzeuges ausgeblendeten Sehfeldbereiche für den Fahrer des Kraftfahrzeuges auf den Monitoren darstellbar sind.

Zur Kontrolle des hinter einem Kraftfahrzeug befindlichen Bereiches ist es bereits bekannt, Kamera-Monitor-Systeme zu verwenden, bei denen die jeweilige Kamera heckseitig an dem Kraftfahrzeug und der Monitor fahrerseitig angeordnet sind. Als nachteilig hat sich bei der Anordnung derartiger Systeme erwiesen, dass der Fahrer beispielsweise beim Rückwärtseinparken sich erst räumlich orientieren muss, da der Monitor nicht in der Nähe und nicht in Richtung der Kamera angeordnet ist.

Aus der US 2005/0168695 A ist ein Fahrzeug-Sichtunterstützungssystem bekannt, das eine außerhalb des Fahrzeuges montierte Kamera aufweist, um ein Bild außerhalb der Säule aufzunehmen, das im Wesentlichen der Blicklinie des Fahrzeuglenkers auf dem Fahrersitz entspricht. Diese wird von einem Projektor in Echtzeit auf die rückstrahlende Oberfläche der Säule projiziert.

Die DE 10 2007 032 527 A betrifft eine Bildverarbeitungsanordnung für ein Kraftfahrzeug, die auf eine am Kraftfahrzeug angeordnete Kamera zum Erfassen von Bildern der Fahrzeugumgebung zurück greift und mit einer Bildanzeigeeinrichtung gekoppelt ist. Diese Anzeigeeinrichtung ist in der vorderen Säule A im Blickfeld herkömmlicher Außenspiegel angeordnet. Auch die aufnehmende Kamera befindet sich im Außenspiegelbereich. Auch die JP 2006 290304 A beschäftigt sich mit einem Verfahren und einer Vorrichtung zur Anzeige der Umgebung eines Fahrzeuges in Realzeit. Gleiche Thematik betrifft die JP 2005 184225 A.

Mit der DE 103 40 496 A wird eine Visualisierung des toten Winkels hinter eine A-Säule eines Fahrzeuges vorgeschlagen, die sich dadurch auszeichnet, dass in der Säule direkt eine Kamera eingebunden ist, die einen erweiterten Kamerablickwinkel aufweist. Die Bilder der Kamera werden dann auf einer Anzeigevorrichtung dargestellt. Die JP 2008 087651 offenbart ein Kamerasystem, dass in einem Spiegel eines Fahrzeuges eingebunden ist, wobei es sich bei der Kamera um eine Weitwinkelkamera handelt.

Der Erfindung liegt die Aufgabe zugrunde, eine einfache Vorrichtung zur Vergrößerung des Sehfeldes des Fahrers eines Kraftfahrzeuges bei Fahrt anzugeben, wobei sich der Fahrer nicht immer wieder räumlich neu orientieren muss.

Diese Aufgabe wird erfindungsgemäß durch die Merkmale des Anspruchs 1 gelöst. Weitere, besonders vorteilhafte Ausgestaltungen der Erfindung offenbaren die Unteransprüche.

Die Erfindung beruht im Wesentlichen auf dem Gedanken, mit Hilfe mindestens einer im Außenbereich des Kraftfahrzeuges angeordneten Kamera Bilder aufzunehmen und gegebenenfalls in einer Verarbeitungselektronik weiterzuverarbeiten, so dass sich Bilder ergeben, welche jeweils dem Bild des Sehfeldes des Fahrers entsprechen, das sich ohne die Sehfeld begrenzenden Hindernisse ergibt. Diese Bilder werden dann mittels mindestens einer im Innenraum des Kraftfahrzeuges angeordneten Projektionseinrichtung abschnittsweise auf Projektionsflächen dargestellt, welche innenseitig an den Hindernissen im vorderen Kraftfahrzeugbereich befestigt sind, so dass die durch die Hindernisse ausgeblendeten äußeren Sehfeldbereiche auf diesen Projektionsflächen sichtbar sind.

Ein ähnliches Vorgehen zur Erzeugung der Bilder, die dann jedoch in einem Panorama-Sicht-System dargestellt werden, ist beispielsweise in der DE 10 2006 003 524 A1 offenbart, wobei auch auf den darin aufgelisteten Stand der Technik verwiesen werden kann.

Vorzugsweise wird als Kamera eine Weitwinkelkamera verwendet, welche oberhalb des Fahrers angeordnet wird.

Außerdem kann auch die Projektionseinrichtung im Wesentlichen oberhalb des Fahrers angeordnet werden.

Die erfindungsgemäße Vorrichtung umfasst vorzugsweise eine im Außenbereich des Kraftfahrzeuges oberhalb des Fahrers anordbare Weitwinkelkamera und ist über eine Verarbeitungselektronik mit mindestens einer im Innenraum des Kraftfahrzeuges oberhalb des Fahrers angeordneten Projektionseinrichtung verbunden, welche die von der Weitwinkelkamera aufgenommenen Bilder abschnittsweise auf Projektionsflächen darstellt, welche innenseitig an den Hindernissen im vorderen Kraftfahrzeugbereich befestigt sind.

Statt einer einzigen Weitwinkelkamera, die oberhalb des Fahrers befestigt ist, können beispielsweise auch zwei separate Kameras verwendet werden, welche jeweils im Bereich einer der beiden A-Säulen des Kraftfahrzeuges außenseitig an diesen angeordnet sind. Die mit diesen Kameras aufgenommenen Bilder müssen dann in der Verarbeitungselektronik zu einem Bild zusammengesetzt und dieses Bild abschnittsweise auf den Projektionsflächen dargestellt werden. Allerdings ist für eine derartige Bilddarstellung ein relativ hoher Aufwand für die Bildverarbeitung erforderlich.

Die erfindungsgemäße Vorrichtung weist nicht nur den Vorteil auf, dass sie das Sehfeld des jeweiligen Fahrers vergrößert und damit auch mehr Sicherheit für den Fahrer im Straßenverkehr bietet, sondern bei gepanzerten Kraftfahrzeugen kann auch der ballistische Schutz gegenüber vergleichbaren bekannten Kraftfahrzeugen wesentlich erhöht werden, da die aus Stahl bestehenden A-Säulen breiter gewählt werden können und einen besseren Schutz als Fenster aus Glas oder einem Verbundmaterial bieten.

Weitere Einzelheiten und Vorteile der Erfindung ergeben sich aus dem folgenden, anhand von Figuren erläuterten Ausführungsbeispiel. Es zeigen:
- Fig. 1: eine schematische Draufsicht auf den vorderen dachseitigen Bereich eines gepanzerten Kraftfahrzeuges mit einer erfindungsgemäßen Vorrichtung und
- Fig. 2: eine Fig.1 entsprechende Draufsicht auf den Innenraum des Kraftfahrzeuges.

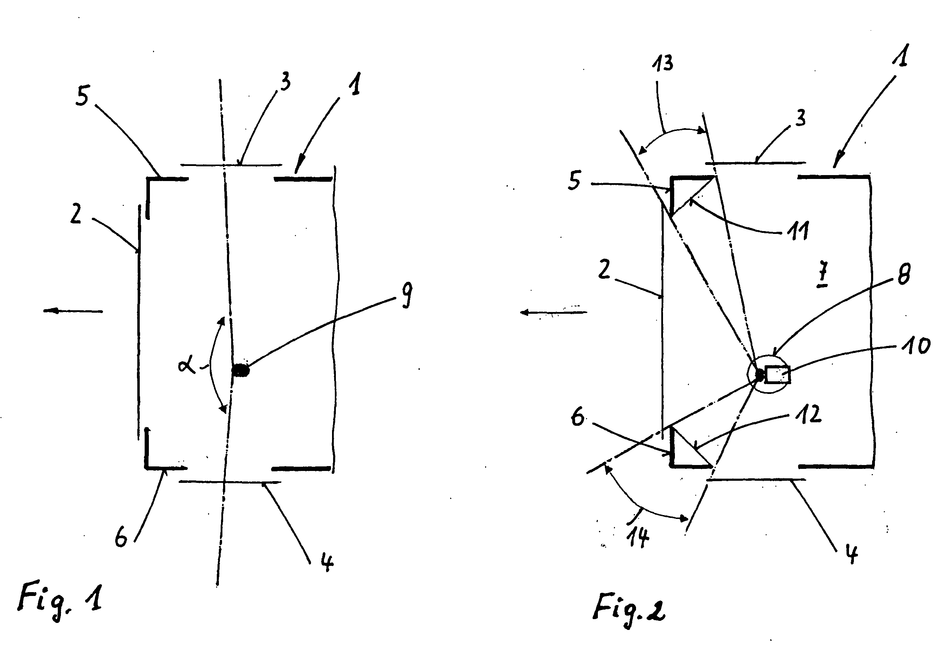

In den Fig. 1 und 2 ist mit 1 ein gepanzertes Kraftfahrzeug gekennzeichnet, welches sowohl ein Frontfenster 2 als auch zwei Seitenfenster 3 und 4 besitzt. Zwischen dem Frontfenster 2 und den beiden Seitenfenstern 3, 4 befinden sich jeweils eine A-Säule 5, 6, die das Sehfeld eines im Innenraum 7 des Kraftfahrzeuges 1 befindlichen Fahrers 8 einschränkt.

Erfindungsgemäß ist daher im Außenbereich des Kraftfahrzeuges 1, etwa oberhalb des Fahrers 8, eine Weitwinkelkamera 9 mit einem Sichtwinkel α von ca. 180° befestigt. Diese Weitwinkelkamera 9 ist über eine nicht dargestellte Verarbeitungselektronik mit einer im Innenraum 7 des Kraftfahrzeuges 1 ebenfalls oberhalb des Fahrers 8 angeordneten Projektionseinrichtung 10 verbunden, so dass die von der Weitwinkelkamera 9 aufgenommenen Bilder abschnittsweise auf Projektionsflächen 11, 12 dargestellt werden, welche an den beiden A-Säulen 5, 6 befestigt sind. Dadurch werden die durch die A-Säulen ausgeblendeten Sehfeldbereiche 13, 14 auf den Projektionsflächen 11, 12 sichtbar gemacht.

### Bezugszeichenliste

- 1: Kraftfahrzeug
- 2: Frontfenster
- 3, 4: Seitenfenster
- 5, 6: Hindernisse, A-Säulen
- 7: Innenraum des Kraftfahrzeuges
- 8: Fahrer
- 9: Kamera, Weitwinkelkamera
- 10: Projektionseinrichtung
- 11, 12: Projektionsflächen
- 13, 14: Sehfeldbereiche

## Patentansprüche

1. Vorrichtung zur Vergrößerung des Sehfeldes eines in einem Kraftfahrzeug (1) befindlichen Fahrers (8), wobei
• das Kraftfahrzeug (1) vorderseitig das Sehfeld begrenzende Hindernisse (5, 6), wie Holme, A-Säulen, Fensterrahmen etc., aufweist,
• mit Hilfe einer im Außenbereich des Kraftfahrzeuges angeordneten Weitwinkelkamera (9) Bilder aufgenommen und gegebenenfalls in einer Verarbeitungselektronik weiterverarbeitet werden, so dass
o sich Bilder ergeben, welche dem Bild des Sehfeldes des Fahrers (8) entsprechen, daß sich ohne die Sehfeld begrenzende Hindernisse (5, 6) ergibt, und diese Bilder
o dann mittels mindestens einer im Innenraum (7) des Kraftfahrzeuges (1) angeordneten Projektionseinrichtung (10) abschnittsweise auf Projektionsflächen (11, 12) dargestellt werden, welche innenseitig an den Hindernissen (5, 6) im vorderen Kraftfahrzeugbereich befestigt sind.

2. Vorrichtung nach Anspruch 1, **dadurch gekennzeichnet, dass** die Weitwinkelkamera (9) oberhalb des Fahrers (8) angeordnet ist.

3. Vorrichtung nach Anspruch 1 oder 2, **dadurch gekennzeichnet, dass** die Projektionseinrichtung (10) im Wesentlichen oberhalb des Fahrers (8) angeordnet wird.

4. Vorrichtung nach einem der Ansprüche 1 bis 3, **dadurch gekennzeichnet, dass** der Sichtwinkel der Weitwinkelkamera (9) etwa 180° beträgt.

## Claims

1. Device for increasing the field of vision of a driver (8) in a motor vehicle (1), wherein
• the motor vehicle (1) has in front obstacles (5, 6) such as struts, A pillars, window frames etc., which limit the field of vision,
• images are recorded using a wide angle camera (9) arranged in the outer region of the motor vehicle and, if appropriate, said images are further processed in processing electronics, with the result that
o images are produced which correspond to the image of the field of vision of the driver (8) which occurs without the obstacles (5, 6) which limit the field of vision, and these images
o are then displayed in certain sections on projection surfaces (11, 12) by means of at least one projection device (10) which is arranged in the passenger compartment (7) of the motor vehicle (1), which projection surfaces (11, 12) are attached to the inside of the obstacles (5, 6) in the front region of the motor vehicle.

2. Device according to Claim 1, **characterized in that** the wide angle camera (9) is arranged above the driver (8).

3. Device according to Claim 1 or 2, **characterized in that** the projection device (10) is arranged essentially above the driver (8).

4. Device according to one of Claims 1 to 3, **characterized in that** the viewing angle of the wide angle camera (9) is approximately 180°.

## Revendications

1. Dispositif d'agrandissement du champ visuel d'un conducteur (8) se trouvant dans un véhicule automobile (1) ;
- le véhicule automobile (1) comportant côté avant des obstacles (5, 6) limitant le champ visuel, tels que des barres, des montants A, des châssis de fenêtre, etc. ;
- une caméra grand-angle (9) disposée à l'extérieur d'une zone extérieure du véhicule automobile prenant des images et les traitant en sus le cas échéant dans un système électronique de traitement, de sorte que :
- on obtient des images correspondant à l'image du champ visuel du conducteur (8) sans les obstacles (5, 6) limitant le champ visuel ; et
- ces images étant ensuite représentées à certains endroits sur les surfaces de projection (11, 12) à l'aide d'au moins un système de projection (10) disposé dans l'habitacle (7) du véhicule automobile (1), lesdites surfaces étant fixées côté intérieur aux obstacles (5, 6) dans la zone avant du véhicule automobile.

2. Dispositif selon la revendication 1, **caractérisé en ce que** la caméra grand-angle (9) est disposée au-dessus du conducteur (8).

3. Dispositif selon la revendication 1 ou 2, **caractérisé en ce que** le système de projection (10) est disposé pour l'essentiel au-dessus du conducteur (8).

4. Dispositif selon l'une quelconque des revendications 1 à 3, **caractérisé en ce que** l'angle de prise de vue de la caméra grand-angle (9) est environ de 180°.
